# EUROPEAN PATENT APPLICATION

(11) **EP 4 119 515 A1**
(43) Date of publication of application: **18.01.2023**
(21) Application number: 21767103.1
(22) Date of filing: 12.03.2021
(51) Int. Cl.: C03C 27/12, B60J 1/00, B60R 1/00

(54) **AUTOMOBILE WINDOW GLASS**

(30) Priority: 13.03.2020 JP 2020044831
(71) Applicant: NIPPON SHEET GLASS COMPANY, LIMITED, Tokyo 108-6321 (JP)
(72) Inventor: CHIBA, Kazuki, Tokyo 108-6321 (JP)
(74) Representative: Mewburn Ellis LLP
(86) International application number: PCT/JP2021/010244
(87) International publication number: WO 2021/182642

(57) **Abstract**

The present invention provides an automobile window glass on which a device that acquires electromagnetic waves is disposable. The automobile window glass includes an outer glass plate, an inner glass plate, an intermediate film disposed between the outer glass plate and the inner glass plate, and a blocking layer that is disposed on at least one of a surface on the vehicle interior side of the outer glass plate and a surface on the vehicle interior side of the inner glass plate. The intermediate film includes a functional layer having a transmission region that allows transmission so as not to affect reception of the electromagnetic waves, and an adhesion layer that is disposed on at least one surface of the functional layer and does not affect reception of the electromagnetic waves . The blocking layer has at least one opening at a position corresponding to the transmission region.

## Description

### Technical Field

The present invention relates to an automobile window glass.

### Background Art

An automobile window glass used in a windshield or the like includes an outer glass plate, an inner glass plate, and an intermediate film disposed between these glass plates. In recent years, the intermediate film is provided with various additional functions. A functional layer such as a heat shield film is provided in the intermediate film in order to suppress an increase in temperature caused by infrared rays from the outside of a vehicle, for example (e.g., Patent Literature 1) .

### Citation List

### Patent Literature

Patent Literature 1: JP 2016-64965A

### Summary of Invention

### Technical Problem

Incidentally, recent automobiles are provided with devices such as a camera on their windshields so as to be able to capture images of the outside thereof. Thus, light that has passed through the glass plates and the intermediate film enters the camera. However, because a functional layer included in the interlayer described above has various functions, such a layer may affect light passing therethrough depending on the type thereof, and images captured by the camera may be distorted, for example. Note that such issues may arise not only in images captured by cameras but also in various devices for acquiring electromagnetic waves from the outside of vehicles.

The present invention was made in order to resolve the foregoing issues, and aims to provide an automobile window glass that is capable of preventing failures in a device that acquires electromagnetic waves from the outside of a vehicle.

### Solution to Problem

Aspect 1. An automobile window glass on which a device that acquires electromagnetic waves is disposable, the automobile window glass including:
an outer glass plate;
an inner glass plate;
an intermediate film that is disposed between the outer glass plate and the inner glass plate; and
a blocking layer disposed on at least one of a surface on a vehicle interior side of the outer glass plate and a surface on a vehicle interior side of the inner glass plate,
in which the intermediate film includes:
   a functional layer having a transmission region that allows transmission so as not to affect reception of the electromagnetic waves, and
   an adhesion layer that is disposed on at least one surface of the functional layer and does not affect reception of the electromagnetic waves, and
   the blocking layer has at least one opening at a position corresponding to the transmission region.

Aspect 2. The automobile window glass according to Aspect 1, in which the transmission region is formed by a through-hole or a notch.

Aspect 3. The automobile window glass according to Aspect 1 or 2, in which the transmission region is formed by a through-hole having an outer edge outward of an outer edge of the opening.

Aspect 4. The automobile window glass according to Aspect 1 or 2, in which the transmission region is formed by a notch that has an outer edge outward of an outer edge of the opening and is open at an upper end of the two glass plates.

Aspect 5. The automobile window glass according to Aspect 3 or 4, in which the outer edge of the transmission region is located 2 mm or more outward of the outer edge of the opening.

Aspect 6. The automobile window glass according to any one of Aspects 3 to 5, in which the outer edge of the transmission region is covered by the blocking layer.

Aspect 7. The automobile window glass according to any one of Aspects 1 to 6, in which the electromagnetic waves are visible light.

Aspect 8. The automobile window glass according to any one of Aspects 1 to 7, in which the device is a camera.

Aspect 9. The automobile window glass according to any one of Aspects 1 to 8, in which the adhesion layer in the intermediate film is made of PVB.

### Advantageous Effects of Invention

According to the present invention, it is possible to prevent failures in a device that acquires electromagnetic waves from the outside of a vehicle.

### Brief Description of Drawings

FIG. 1 is a plan view showing one embodiment in which an automobile window glass according to the present invention is applied to a windshield.
FIG. 2 is a cross-sectional view of FIG. 1.

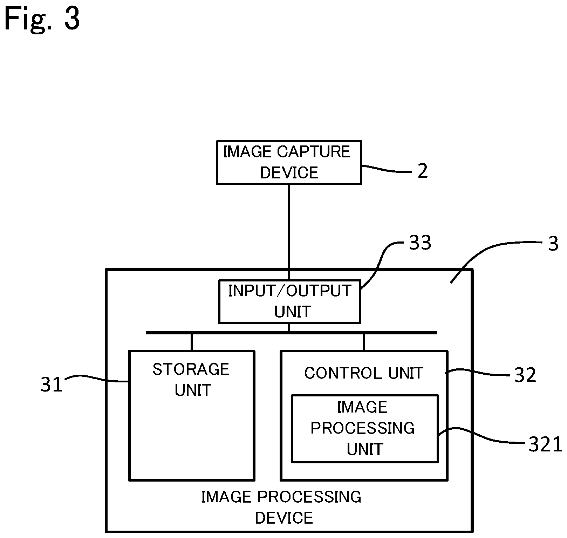

FIG. 3 is a block diagram showing a schematic configuration of an in-vehicle system.
FIG. 4 is a cross-sectional view of a portion shown in FIG. 1.
FIG. 5 is a plan view showing another example of the windshield shown in FIG. 1.
FIG. 6 is a partial cross-sectional view showing another example of the windshield shown in FIG. 1.

### Description of Embodiments

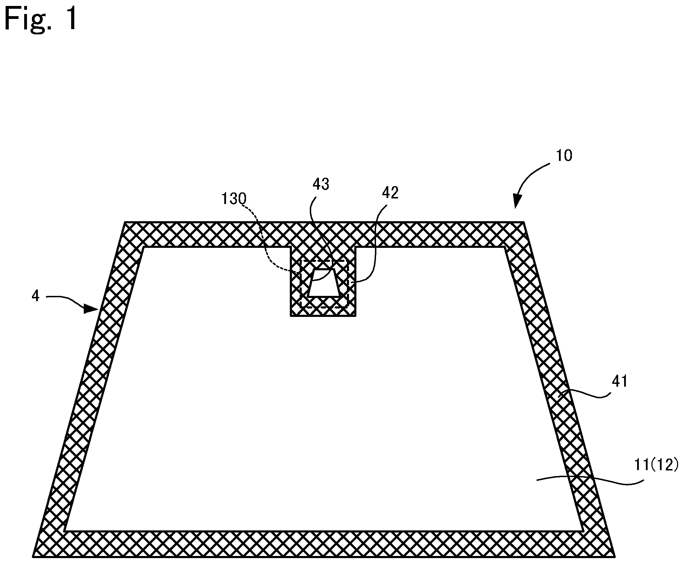

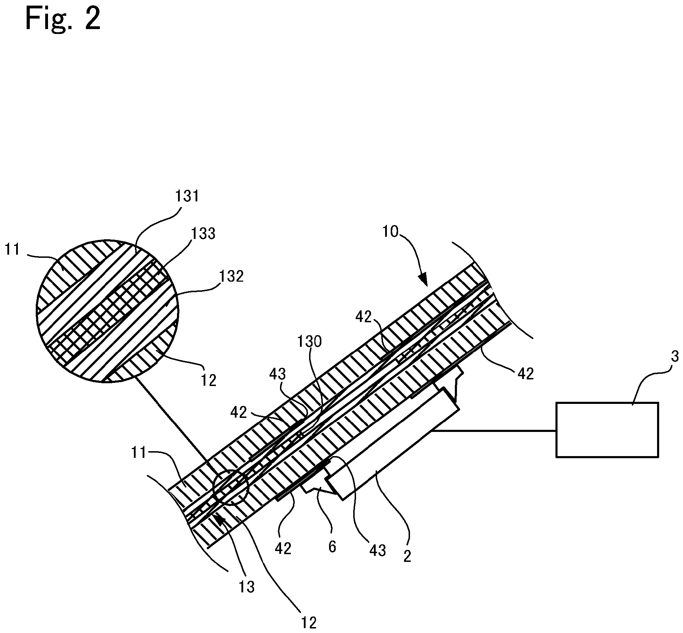

Hereinafter, one embodiment when an automobile window glass according to the present invention is applied to a windshield will be described with reference to the drawings. FIG. 1 is a plan view of a windshield, and FIG. 2 is a cross-sectional view of FIG. 1. Note that the "up-down direction" in FIG. 1 refers to "upper and lower", "perpendicular", and "vertical", and the "left-right direction" in FIG. 1 refers to "horizontal" for convenience of description. FIG. 1 illustrates a windshield as viewed from the vehicle interior side. That is to say, the far side of the paper plane of FIG. 1 refers to the vehicle exterior side, and the near side of the paper plane of FIG. 1 refers to the vehicle interior side.

This windshield is provided with a trapezoidal laminated glass 10, and is installed in a vehicle body in an inclined state. The laminated glass 10 includes an outer glass plate 11, an inner glass plate 12, and an intermediate film 13 disposed therebetween. Then, a blocking layer 4 is layered on a surface on the vehicle interior side of the inner glass plate 12, and the field of view from the outside of the vehicle is blocked by this blocking layer 4. Also, the blocking layer 4 is provided with an opening 43, and images of the outside of the vehicle can be captured by the imaging device 2 disposed inside the vehicle via the opening 43. That is, this opening 43 constitutes an imaging window. Also, a frame-shaped bracket 6 is fixed to the blocking layer 4 of the inner glass plate 12, and the imaging device 2 is attached to the bracket 6. Because the bracket 6 is fixed to the blocking layer 4 that is formed in a frame shape, the bracket 6 cannot be seen from the outside of the vehicle. Hereinafter, constituent elements will be described in detail.

### 1. Laminated Glass

FIG. 2 is a cross-sectional view of a laminated glass. As shown in FIG. 2, this laminated glass 10 includes an outer glass plate 11 and an inner glass plate 12, and a resin intermediate film 13 is disposed between the glass plates 11 and 12. Hereinafter, the configuration thereof will be described.

### 1-1. Glass Plate

First, the outer glass plate 11 and the inner glass plate 12 will be described. Known glass plates can be used as the outer glass plate 11 and the inner glass plate 12, and these glass plates can also be made of heat-ray absorbing glass, regular clear glass or green glass, or UV green glass . However, the glass plates 11 and 12 are required to attain a visible light transmittance that conforms to the safety standards of a country in which the automobile is to be used. An adjustment can be made so that the outer glass plate 11 ensures a required solar absorptance and the inner glass plate 12 provides a visible light transmittance that meets the safety standards, for example. An example of clear glass, an example of heat-ray absorbing glass, and an example of soda-lime based glass are shown below.

### Clear glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R represents an alkali metal)
Total iron oxide (T-Fe₂O₃) in terms of Fe₂O₃: 0.08 to 0.14 mass%

### Heat-ray absorbing glass

With regard to the composition of heat-ray absorbing glass, a composition obtained based on the composition of clear glass by setting the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the components (mainly SiO₂ and Al₂O₃) forming the framework of glass by an amount corresponding to the increases in T-Fe₂O₃, CeO₂, and TiO₂ can be used, for example.

### Soda-lime based glass

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

Although there is no particular limitation on the thickness of the laminated glass 10 according to this embodiment, it is possible to set the total thickness of the outer glass plate 11 and the inner glass plate 12 to 2.1 to 6 mm, for example, and, from the viewpoint of weight reduction, the total thickness of the outer glass plate 11 and the inner glass plate 12 is preferably set to 2.4 to 3.8 mm, more preferably 2.6 to 3.4 mm, and particularly preferably 2.7 to 3.2 mm. As described above, there is a need to reduce the total thickness of the outer glass plate 11 and the inner glass plate 12 in order to reduce the weight. Therefore, although there is no particular limitation on the thicknesses of the glass plates, the thicknesses of the outer glass plate 11 and the inner glass plate 12 can be determined as described below, for example.

The outer glass plate 11 is mainly required to have durability and impact resistance against external hazards. When this outer glass plate is used for a windshield of an automobile, impact resistance against flying objects such as small stones is required. On the other hand, increasing the thickness increases the weight, which is not preferable. From this viewpoint, the thickness of the outer glass plate 11 is preferably 1.8 to 2.3 mm, and more preferably 1.9 to 2.1 mm. The thickness to be used can be determined in accordance with the application of the glass plate.

Although the thickness of the inner glass plate 12 can be made equal to that of the outer glass plate 11, the thickness of the inner glass plate 12 can be made smaller than that of the outer glass plate 11 in order to reduce the weight of the laminated glass 10, for example. Specifically, when glass strength is taken into consideration, the thickness is preferably 0.6 to 2.0 mm, more preferably 0.8 to 1.6 mm, and particularly preferably 1.0 to 1.4 mm. Furthermore, the thickness is preferably 0.8 to 1.3 mm. With regard to the inner glass plate 12 as well, the thickness to be used can be determined in accordance with the application of the glass plate.

Here, an example of a method of measuring the thickness of a curved glass plate (laminated glass) 1 will be described. First, with respect to the measurement position, the measurement is performed at two positions: an upper position and a lower position on a center line S extending vertically through the center of a glass plate in the horizontal direction. Although there is no particular limitation on the measuring apparatus, a thickness gauge such as SM-112 manufactured by TECLOCK Corporation can be used, for example. During measurement, the glass plate is disposed such that the curved surface of the glass plate is placed on a flat surface, and an end portion of the glass plate is sandwiched by and measured with the thickness gauge. Note that a flat glass plate can also be measured in the same manner as a curved glass plate.

### 1-2. Intermediate Film

As shown in FIG. 2, the intermediate film 13 includes a first transparent adhesion layer 131 that is bonded to the outer glass plate 11, a second transparent adhesion layer 132 that is bonded to the inner glass plate 12, and a transparent functional layer 133 interposed between these adhesion layers 131 and 132.

The first adhesion layer 131 and the second adhesion layer 132 need only be made of materials that allow the passage of light therethrough without affecting the light (visible light) entering the camera when images are captured by the imaging device 2. That is, as will be described later, the materials of the two adhesion layers 131 and 132 are selected such that the images, which are formed by light passing through the two adhesion layers 131 and 132 and captured by the camera, are hardly affected by distortion by the two adhesion layers 131 and 132 and the like. Also, the two adhesion layers 131 and 132 are respectively bonded to the glass plates 11 and 12 through fusion, and can be formed using polyvinyl butyral resin (PVB), ethylene vinyl acetate resin (EVA), or the like, for example. In general, the hardness of a polyvinyl acetal resin can be controlled by adjusting (a) the degree of polymerization of polyvinyl alcohol, which is the starting material, (b) the degree of acetalization, (c) the type of plasticizer, (d) the ratio of the plasticizer to be added, and the like.

The surfaces of the first adhesion layer 131 and the second adhesion layer 132 before being bonded to the glass plates 11 and 12 may be embossed in order to be able to easily push air out when the first adhesion layer 131 and the second adhesion layer 132 are bonded to the functional layer 133 or to the glass plates 11 and 12.

Although the thicknesses of the first adhesion layer 131 and the second adhesion layer 132 are not particularly limited, the thicknesses are preferably 20 µm to 2.0 mm, more preferably 20 µm to 1.0 mm, and particularly preferably 50 µm to 100 µm, for example. Note that the thicknesses of the adhesion layers 131 and 132 may be the same or different. When the adhesion layers 131 and 132 are to be embossed, it is preferable to set the thickness to 20 µm or more as described above in consideration of the embossing depth. Also, instead of using a sheet-shaped adhesion layer, it is possible to form the adhesion layers 131 and 132 through coating. In such a case, it is possible to form a thin adhesion layer with a thickness of 0.3 µm to 100 µm.

The total thickness of the adhesion layers 131 and 132 is preferably not less than 0.76 mm. This is to ensure penetration resistance and the like of the windshield, specified in JIS R3211 and R3212, for example.

A film having various functions can be used as the functional layer 133 according to the purpose. A known heat shield film, heat generating film, projection film, light emitting film, antenna film, dimming film, or the like may be used.

In order to suppress an increase in temperature in the vehicle, a known infrared reflective film that reflects infrared rays, or a film configured to absorb infrared rays may be adopted as the heat shield film. Such a heat shield film is preferably disposed on the outer glass plate 11 side in the thickness direction of the intermediate film 13. That is to say, the first adhesion layer 131 is to be thinner than the second adhesion layer 132. With such a configuration, the laminated glass can reflect or absorb infrared rays at a position farther from the vehicle interior. In order to achieve a heat shielding function, in addition to forming the functional layer 133 using a heat shield film, it is possible to form at least one of the first adhesion layer 131 and the second adhesion layer 132 using a heat shielding PVB.

The heat generating film is used for defogging and to deice, and has a configuration in which a plurality of thin wires that generate heat upon a voltage being applied thereto are supported by a base film. The base film may be a film that is transparent to visible light, and the material thereof is not particularly limited. The base film may be formed of, for example, polyethylene terephthalate, polyethylene, polymethylmethacrylate, polyvinyl chloride, polyester, polyolefin, polycarbonate, polystyrene, polypropylene, nylon, or the like. Also, it is possible to adopt a transparent conductive film heater constituted by a thin film silver heater, an ITO heater, or the like, for example, in addition to heat generated by thin wires.

The projection film is a film onto which information is projected by light emitted from a head-up display device (hereinafter referred to as an HUD). The projection film is not particularly limited as long as it is a film that reflects light and has a refractive index different from those of the adhesion layers 131 and 132. A film that can control polarization, such as a p-polarized light reflection film, a hologram film, a scattering reflection system type transparent screen, a scattering transmission type transparent screen, a scattering reflection type dimming film, a scattering transmission type dimming film, or a high reflection film for an HUD may be used, for example. Although there is no particular limitation on the size of the projection film, it is preferably larger than the area onto which information is to be projected. The projection film may be supported by a base film. The base film may be the same as that used in the aforementioned heat generating film. The projection film may have the same size as the base film, or be smaller than the base film. If this is the case, it is preferable that the outer edge of the projection film is located inward of the outer edge of the base film.

Note that the base film may be disposed on either the outer glass plate-side surface or the inner glass plate-side surface of the projection film. Alternatively, the projection film may be sandwiched between two base films.

The light emitting film has a built-in LED or the like, and emits light to show predetermined characters, figures, and so on.

The antenna film is, as with the heat generating film, a film formed by disposing an FM, AM, DTV, or DAB antenna on the above-described base film, for example.

Although various dimming films are proposed, it is possible to realize a transparent state and an opaque state by controlling the haze ratio of the film depending on whether or not power is supplied, for example. That is, the dimming film is a functional film that can provide privacy. It is possible to use known dimming films such as a PDLC (Polymer Dispersed Liquid Crystal) type using liquid crystal, an SPD (Suspended Particle Device) type, an electrochromic type, and a thermochromic type, for example. A PDLC type dimming film can be constituted by a liquid crystal layer, a pair of transparent conductive films sandwiching this liquid crystal layer, and a PET film disposed on the outer surface of each transparent conductive film, for example. The liquid crystal layer has a transparent polymer film and liquid crystal capsules formed by encapsulating the liquid crystals.

Note that the above-described films are examples of the functional layer 133, and the functional layer 133 is not limited to these examples.

Although not particularly limited, the thickness of the film constituting the functional layer 133 described above is preferably 50 to 600 µm, more preferably 50 to 500 µm, and particularly preferably 50 to 100 µm, for example.

Further, a rectangular through-hole (transmission region) 130 is formed in the functional layer 133, and this through-hole 130 is arranged at a position corresponding to the opening 43 in the blocking layer 4, which will be described later. More specifically, as shown in FIGS. 1 and 2, the outer edge of this through-hole 130 is located outward of the outer edge of the opening 43 in the blocking layer 4, and located inward of an outer edge of an extension portion 42 of the blocking layer 4.

Note that the thicknesses of the adhesion layers 131 and 132 and the functional layer 133 can be measured in the following manner, for example. First, the cross section of the windshield is displayed under 175 times magnification, using a microscope (for example, VH-5500 manufactured by KEYENCE). Thereafter, the thicknesses of the adhesion layers 131 and 132 and the functional layer 133 are visually specified, and are measured. At this time, in order to eliminate visual variations, the number of measurements is set to 5, and the average value is taken as the thicknesses of the adhesion layer 131 and 132 and the functional layer 133.

The adhesion layers 131 and 132 have the same size as the outer glass plate 11 and the inner glass plate 12, whereas the functional layer 133 may have a smaller size than the adhesion layers 131 and 132. The peripheral edge of the functional layer 133 can be located inward of the peripheral edges of the glass plates 11 and 12, for example, and in particular, can be disposed so as to be concealed by a peripheral edge portion 41 of the blocking layer 4, which will be described later.

Although there is no particular limitation on the method of manufacturing the intermediate film 13, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated with a pressing process, a lamination process, or the like. In the method of laminating with the pressing process, the lamination process, or the like, each of the resin films before laminating may have a single-layer structure or a multilayer structure. Also, the intermediate film 13 may include a single layer instead of the plurality of layers as mentioned above.

### 2. Overview of Blocking Layer

Next, the blocking layer 4 will be described. As shown in FIG. 1, the blocking layer 4 is layered on a surface on the vehicle interior side of the outer glass plate 11 and a surface on the vehicle interior side of the inner glass plate 12. Because the blocking layers 4 that are respectively layered on these surfaces have the same shape, the following describes the blocking layer 4 layered on the inner glass plate 12. More specifically, the blocking layer 4 includes the peripheral edge portion 41 layered along the entire peripheral edge of the inner glass plate 12, and a rectangular extension portion 42 that is connected to the peripheral edge portion 41 and extends downward from the vicinity of the center of the upper side of the inner glass plate 12. A trapezoidal opening 43 is formed in a lower end portion of the extension portion 42, and the imaging device 2 attached to the vehicle interior side can capture images of the outside of the vehicle via this opening 43 and the laminated glass 10.

As shown in FIG. 2, the above-described bracket 6 is fixed to the blocking layer 4. Specifically, the bracket 6 is formed in a frame shape surrounding the opening, and is fixed to the blocking layer 4 using a piece of double-sided tape, an adhesive, or the like. Also, the bracket 6 is configured such that the imaging device 2 is supported by this bracket 6 and the imaging device 2 can capture images of the outside of the vehicle through the opening 43. Also, although not shown, a cover is attached to the bracket 6 such that the imaging device 2 cannot be seen from the vehicle interior side.

Next, the material of the blocking layer 4 will be described. The material of the blocking layer 4 may be selected as appropriate according to an embodiment as long as it can block the field of view from the outside of the vehicle, and a ceramic material with a dark color such as black, brown, gray, or dark blue may be used, for example.

If a black ceramic material is selected as the material of the blocking layer 4, for example, the black ceramic material is layered through screen printing or the like on the inner surface of the inner glass plate 12, and the layered ceramic material is heated together with the glass plates 11 and 12. Once the ceramic material has hardened, the blocking layer 4 is complete. Note that various materials can be used as the ceramic material to be used for the blocking layer 4. It is possible to use a ceramic material with a composition shown in Table 1 below for the blocking layer 4, for example.

**Table 1**

| | | First and Second Colored Ceramic Pastes |
|---|---|---|
| Pigment*1 | mass% | 10 |
| Resin (cellulosic resin) | mass% | 10 |
| Organic solvent (pine oil) | mass% | 10 |
| Glass binder*2 | mass% | 70 |
| Viscosity | dPs | 150 |

| | | |
|---|---|---|
| *1 Main components: copper oxide, chromium oxide, iron oxide, and manganese oxide *2 Main components: bismuth borosilicate and zinc borosilicate | | |

Note that, although the blocking layer 4 is layered on the surface on the vehicle interior side of the outer glass plate 11 and the inner surface of the inner glass plate 12 in the above example, the blocking layer 4 may be layered only on a surface on the vehicle interior side of the inner glass plate 12. Alternatively, the blocking layer 4 may be layered only on the inner surface of the outer glass plate 11.

### 3. In-vehicle System

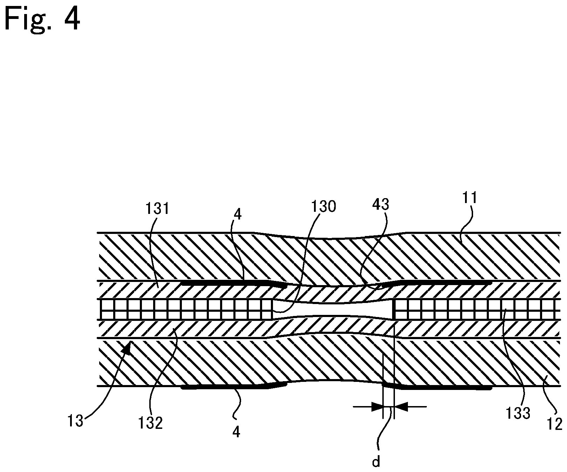

Next, an in-vehicle system provided with the imaging device 2 and an image processing device 3 will be described using FIGS. 2 and 4. FIG. 4 shows the configuration of the in-vehicle system. As shown in FIG. 4, the in-vehicle system according to this embodiment includes the imaging device 2 and the image processing device 3 connected to the imaging device 2.

The image processing device 3 is a device for processing images captured by the imaging device 2. This image processing device 3 includes general hardware such as a storage unit 31, a control unit 32, and an input/output unit 33 that are connected via a busbar, as a hardware configuration, for example. However, the hardware configuration of the image processing device 3 is not limited to such an example, and, with regard to a specific hardware configuration of the image processing device 3, it is possible to add, or omit and add constituent elements as appropriate according to an embodiment.

The storage unit 31 stores various data and programs used in processing executed by the control unit 32 (not shown) . The storage unit 31 may be realized by a hard disk, or a recording medium such as a USB memory, for example. Also, various data and programs stored in the storage unit 31 may be acquired from a recording medium such as a CD (Compact Disc) or a DVD (Digital Versatile Disc). Furthermore, the storage unit 31 may be referred to as an "auxiliary storage".

As described above, the laminated glass 10 is disposed in an inclined orientation with respect to the vertical direction, and is curved. Also, the imaging device 2 captures images of the outside of a vehicle via such a laminated glass 10. Thus, the images captured by the imaging device 2 are deformed according to the orientation, shape, refractive index, optical defects, and the like of the laminated glass 10. Aberrations that are specific to the camera lens of the imaging device 2 also cause deformation. In view of this, the storage unit 31 may store correction data for correcting images that are deformed due to aberrations of the laminated glass 10 and the camera lens.

The control unit 32 includes one or more processors such as a microprocessor or a CPU (Central Processing Unit), and peripheral circuits (a ROM (Read Only Memory), a RAM (Random Access Memory), an interface circuit, and the like) used for processing performed by these processors. The ROM, the RAM, and the like may be called the main storages in the sense that they are located in the address space handled by the processors in the control unit 32. The control unit 32 functions as an image processing unit 321 by executing various data and programs stored in the storage unit 31.

The image processing unit 321 processes images captured by the imaging device 2. Processing performed on the captured images can be selected as appropriate according to an embodiment. The image processing unit 321 may recognize a subject present in a captured image by analyzing the captured image through pattern matching or the like, for example. In this embodiment, in order that the imaging device 2 captures images of situation forward of the vehicle, the image processing unit 321 may further determine whether or not an organism such as a human being is present on the forward side of the vehicle based on this subject recognition. Then, if a person is present on the forward side of the vehicle, the image processing unit 321 may output a warning message, using a predetermined method. Also, the image processing unit 321 may perform a predetermined process on a captured image, for example. Then, the image processing unit 321 may output the processed captured image to a display device (not shown) such as a display connected to the image processing device 3.

The input/output unit 33 is one or more interfaces for transmitting and receiving data to/from a device that is present outside the image processing device 3. The input/output unit 33 is an interface for connecting to a user interface, or an interface of a USB (Universal Serial Bus), for example. Note that the image processing device 3 is connected to the imaging device 2 via the input/output unit 33, and acquires images captured by the imaging device 2 in this embodiment.

In addition to a device designed exclusively for a service to be provided, a general-purpose device such as a PC (Personal Computer) or a tablet terminal may be used as such an image processing device 3.

Also, as described above, the imaging device 2 is attached to the bracket 6. Therefore, attachment of the imaging device 2 to the bracket 6 and attachment of the bracket to the blocking layer 4 are adjusted such that the optical axis of the camera lens of the imaging device 2 passes through the opening 43 in this state. Also, a cover (not shown) is attached to the bracket 6 so as to cover the imaging device 2. Therefore, the imaging device 2 is disposed in the space surrounded by the laminated glass 10, the bracket, and the cover, and the imaging device 2 cannot be seen from the vehicle interior side, and only a portion of the imaging device 2 can be seen from outside the vehicle through the opening 43 due to the blocking layer 4. Also, the imaging device 2 and the above-described input/output unit 33 are connected to each other by a cable (not shown), and this cable is drawn out from the cover and is connected to the image processing device 3 disposed at a predetermined position in the vehicle.

### 4. Method for Manufacturing Windshield

Next, an example of a method for manufacturing a windshield with the above-described configuration will be described. First, a method for manufacturing a laminated glass 10 will be described.

First, at least one of the outer glass plate 11 and the inner glass plate 12 that have a flat plate shape, and the above-described blocking layer 4 are laminated. Next, shape forming is performed so that the glass plates 11 and 12 are curved. The shape forming method is not particularly limited, and a known method may be adopted. After the flat glass plates have been passed through a heating furnace, by pressing the glass plates using an upper mold and a lower mold, it is possible to form the glass plates into a curved shape, for example. Alternatively, the flat outer glass plate and inner glass plate are placed on each other, are positioned on a frame-shaped mold, and are passed through a heating furnace. As a result, the two glass plates are softened, and are formed into a curved shape under their own weight.

When the outer glass plate 11 and the inner glass plate 12 are formed in a curved shape in this way, the intermediate film 13 is subsequently sandwiched between the outer glass plate 11 and the inner glass plate 12, and they are placed in a rubber bag, and pre-bonded to each other at approximately 70°C to 110°C while performing suction under reduced pressure. The intermediate film 13 is, for example, the functional layer 133 provided with the through-hole 130 and sandwiched by the adhesion layers 131 and 132. Other pre-bonding methods may also be employed. The intermediate film 13 is sandwiched between the outer glass plate 11 and the inner glass plate 12, and they are heated at 45°C to 65°C in an oven, for example. Subsequently, this laminated glass is pressed using a roll at 0.45 MPa to 0.55 MPa. Next, the laminated glass is heated again in an oven at 80°C to 105°C, and is thereafter pressed again using a roll at 0.45 MPa to 0.55 MPa. In this way, pre-bonding is complete.

Next, main bonding is performed. The pre-bonded laminated glass is subjected to main bonding, using an autoclave at 8 atm to 15 atm at 100°C to 150°C, for example. Specifically, main bonding can be performed at 14 atm at 145°C, for example. Thus, the windshield according to the present embodiment is manufactured.

### 5. Features

According to the windshield configured as described above, it is possible to obtain the following effects.
(1) As described above, because the functional layer 133 has various functions, light entering the camera may be affected, and captured images may be distorted, depending on the type thereof, for example. In view of this, in this embodiment, the through-hole 130 is formed in the functional layer 133 so that light from the outside of the vehicle passes through the through-hole 130 and then enters the camera. This prevents light entering the camera from being affected and prevents failures such as distortion of captured images. Note that, as described above, because the adhesion layers 131 and 132 are made of a material that hardly affects light passing therethrough, the captured images are not affected.
(2) The outer edge of the through-hole 130 is located outward of the outer edge of the opening 43 in the blocking layer 4, and located inward of the outer edge of the extension portion 42. Thus, the outer edge of the through-hole 130 is concealed by the blocking layer 4, and thus cannot be seen from the outside and the inside of the vehicle.
(3) As shown in FIG. 4, because the functional layer 133 is provided with the through-hole 130, the two adhesion layers 131 and 132 may be close to each other and the intermediate film 13 may become thin. Accordingly, a recess may be formed in at least one of the outer glass plate 11 and the inner glass plate 12 at the position where the through-hole 130 is formed. As a result, the glass plates 11 and 12 may be distorted in the vicinity of the outer edge of the through-hole 130, resulting in optical distortion and captured images being affected. In contrast, because the outer edge of the through-hole 130 is located outward of the opening 43 as described above, the vicinity of the outer edge of the through-hole 130 is not included in the captured images. From this point of view, a distance d between the outer edge of the opening 43 and the outer edge of the through-hole 130 is preferably 2 mm or more, and may be 5 mm or more.

### 6. Modified Examples

Although embodiments of the present invention have been described above, the present invention is not limited to the above-described embodiments, and various modifications can be carried out without departing from the gist of the invention. Note that the following modified examples can be combined as appropriate.

### 6-1

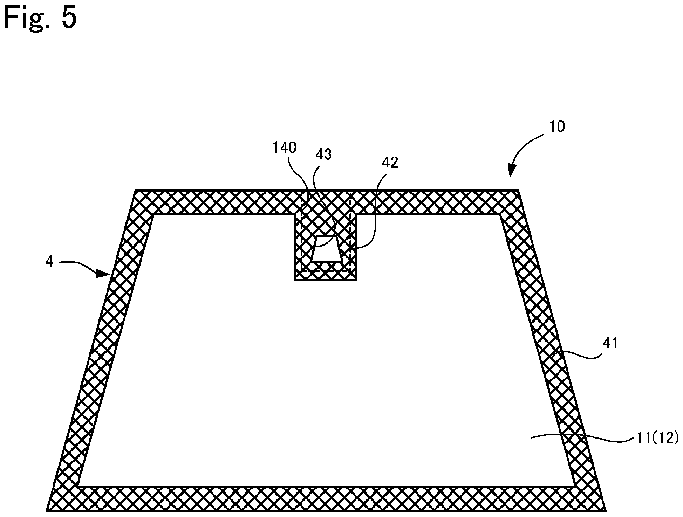

Although the through-hole 130 is formed in the functional layer 133 so as not to affect light entering the camera in the embodiment, as shown in FIG. 5, a notch 140 may be formed in a portion of the functional layer 133, for example. As shown in FIG. 5, the notch 140, which is open at the upper end of the intermediate film 13, is formed in a portion of the functional layer 133. Also, the outer edge of the notch 140 is located outward of the outer edge of the opening 43, and located inward of the outer edge of the extension portion 42. This also prevents the functional layer 133 from affecting captured images. Note that there is no particular limitation on the shape of the notch 140, and the notch 140 need only be open at the upper end of the intermediate film 13.

### 6-2

The through-hole 130 or the notch 140 can have various shapes. That is, as described above, it is preferable that the outer edges thereof are located outward of the outer edge of the opening 43 and located inward of the outer edge of the extension portion 42. However, the present invention is not limited to this.

### 6-3

Although the intermediate film 13 in the above embodiment is configured such that the functional layer 133 is sandwiched between the first and second adhesion layers 131 and 132, an adhesion layer may be disposed only on one surface of the functional layer 133. In this case, the functional layer 133 is to be bonded to one glass plate, and the adhesion layer is to be bonded to the other glass plate.

### 6-4

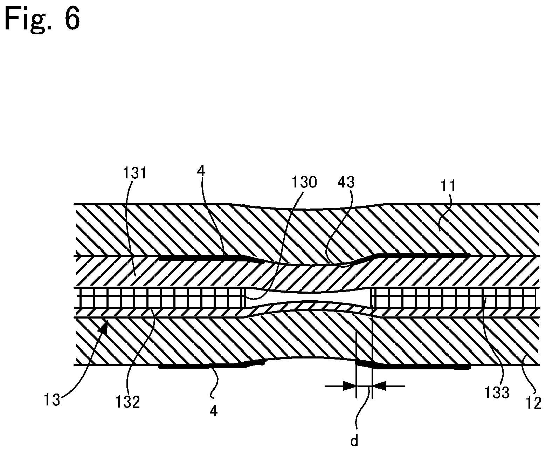

There is no particular limitation on the thicknesses of the adhesion layers 131 and 132, and the adhesion layers 131 and 132 may have different thicknesses. As shown in FIG. 6, the first adhesion layer 131 can be thicker than the second adhesion layer 132, for example. In this case, the second adhesion layer 132 and the inner glass plate 12 warp more than the first adhesion layer 131 and the outer glass plate 11. Thus, it is preferable that the above-described distance d between the outer edge of the opening 43 and the outer edge of the through-hole 130 is made larger. Therefore, the distance d is preferably 5 mm or more, for example.

### 6-5

There is no particular limitation on the shape of the blocking layer 4, and the blocking layer 4 can have various shapes. That is, at least one or more openings 43 need only be formed in order to capture images, and there is no particular limitation on the shape of the openings. Therefore, two or more openings may also be formed. The imaging device 2 may be a stereo camera, corresponding to the openings. Alternatively, any one of the openings may be used for an imaging device having a remote surveillance camera. Because the remote surveillance camera has a distant focus and widely uses the opening as the field of view, captured images may include the vicinity of the edge portion of the opening. Also, with stereo cameras, it is important that images captured by left and right cameras do not deviate from each other. Therefore, as described above, in these cameras, the outer edge of the through-hole 130 or the notch 140 is preferably distanced from the outer edge of the opening.

### 6-6

Although the blocking layer 4 of the outer glass plate 11 and the blocking layer 4 of the inner glass plate 12 have the same shape and are located at the same position in the above embodiment, the present invention is not limited to this. That is, these two layers need not have exactly the same shape as long as the imaging device 2 can capture images through the openings 43 in the two blocking layers 4. Because the laminated glass 10 is installed in an inclined state, the positions of the openings 43 can be slightly shifted according to the inclination.

### 6-7

Although visible light enters the camera in the imaging device through the opening in the above embodiment, a device other than the imaging device may be disposed on the windshield according to the present invention, so as to acquire information from the outside of the vehicle. A device, which acquires various electromagnetic waves other than visible light, such as an infrared sensor, an infrared camera, or an optical beacon, may also be used, for example.

### 6-8

Although an example in which the automobile window glass according to the present invention is applied to a windshield has been described in the above embodiment, the present invention is not limited to this, and the automobile window glass according to the present invention need only be a window glass on which a device for acquiring electromagnetic waves from the outside of a vehicle can be provided. The automobile window glass according to the present invention is applicable to a rear glass, a side glass, or the like, for example.

### List of Reference Numerals

- 10: Laminated glass
- 11: Outer glass plate
- 12: Inner glass plate
- 13: Intermediate film
- 130: Through-hole (transmission region)
- 131: First adhesion layer
- 132: Second adhesion layer
- 133: Functional layer
- 140: Notch (transmission region)
- 2: Imaging device
- 4: Blocking layer
- 43: Opening

## Claims

1. An automobile window glass on which a device that acquires electromagnetic waves is disposable, the automobile window glass comprising:
an outer glass plate;
an inner glass plate;
an intermediate film disposed between the outer glass plate and the inner glass plate; and
a blocking layer that is disposed on at least one of a surface on a vehicle interior side of the outer glass plate and a surface on a vehicle interior side of the inner glass plate,
wherein the intermediate film includes:
a functional layer having a transmission region that allows transmission so as not to affect reception of the electromagnetic waves, and
an adhesion layer that is disposed on at least one surface of the functional layer and does not affect reception of the electromagnetic waves, and
the blocking layer has at least one opening at a position corresponding to the transmission region.

2. The automobile window glass according to claim 1,
wherein the transmission region is formed by a through-hole or a notch.

3. The automobile window glass according to claim 1 or 2,
wherein the transmission region is formed by a through-hole having an outer edge outward of an outer edge of the opening.

4. The automobile window glass according to claim 1 or 2,
wherein the transmission region is formed by a notch that has an outer edge outward of an outer edge of the opening and is open at an upper end of the two glass plates.

5. The automobile window glass according to claim 3 or 4,
wherein the outer edge of the transmission region is located 2 mm or more outward of the outer edge of the opening.

6. The automobile window glass according to any one of claims 3 to 5,
wherein the outer edge of the transmission region is covered by the blocking layer.

7. The automobile window glass according to any one of claims 1 to 6,
wherein the electromagnetic waves are visible light.

8. The automobile window glass according to any one of claims 1 to 7,
wherein the device is a camera.

9. The automobile window glass according to any one of claims 1 to 8,
wherein the adhesion layer in the intermediate film is made of PVB.
